# EUROPEAN PATENT SPECIFICATION

(11) **EP 1 276 295 B1**
(45) Date of publication and mention of the grant of the patent: **08.04.2009**
(21) Application number: 02254488.6
(22) Date of filing: 26.06.2002
(51) Int. Cl.: H04L 29/06, H04M 1/725

(54) **Content downloading system**
System für das Herunterladen von Inhalten
Système de téléchargement de contenu

(30) Priority: 13.07.2001 KR 2001042489
(43) Date of publication of application: 15.01.2003
(73) Proprietor: SAMSUNG ELECTRONICS CO., LTD., Suwon-si, Gyeonggi-do 442-742 (KR)
(72) Inventor: Lee, Ju-Yup, Suwon-city, Gyunggi-do (KR); Kim, Jong-phil, Suwon-city, Gyunggi-do (KR)
(74) Representative: Geary, Stuart Lloyd

(56) References cited:
- EP-A- 1 081 574
- WO-A-00/29928
- WO-A-01/38993
- WO-A-95/35533

## Description

The present invention relates to a method as defined in the pre-characterising part of claim 1 appended hereto.

As the Internet has spread broadly, more people are obtaining information through the Internet. For example, the Internet now provides a variety of content such as MP3 music files and electronic books. Following this trend, the demand for players for reproducing specific types of content, e.g. digital convergence disk players, MP3 players, etc., has been growing continuously.

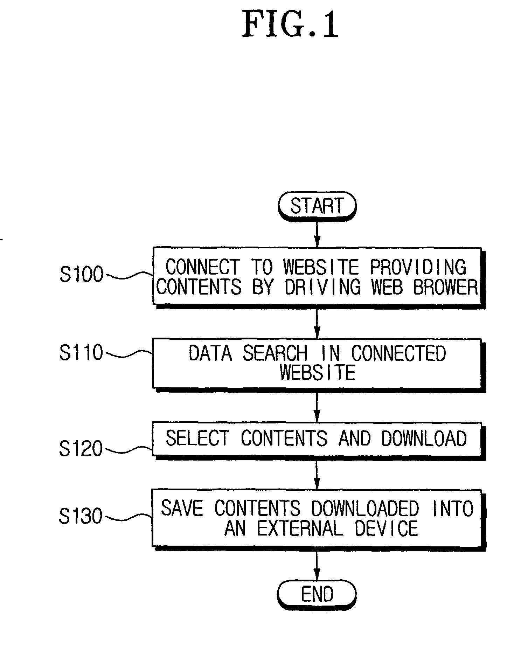

Figure 1 is a flowchart of a conventional procedure for downloading contents through the Internet.

Referring to Figure 1, when a user wants to download content through the Internet, the user first runs a web browser (for example, Internet Explorer, Netscape Navigator, or Opera) to access a website that makes content available for downloading (S100). After connecting to the website, the user searches and tries to find content that the user desires to download (S110). When the user has found desired content, the user downloads the content to a computer (S120), which the user owns. When all these operations are complete, the content is stored in the user's computer and thereby the user saves the contents into an external device (S130).

However, such a method, as above-described, is generally inconvenient and complicated because the user must use a web browser each time he downloads some content. Furthermore, whether or not the user knows exactly where the contents are in the website does not matter because the user must complete the above operations regardless of whether the user knows the location of content. In particular, when the user frequently visits a specific website (for example, a site that provides a song of a singer which the user favours), the user still has to complete a registration form and input the same information repeatedly using a mouse and/or a keyboard.

Besides, if the user wishes to download the content to a device with a unique identifier like a DCDP (Digital Convergence Disk Player), the user must connect to a web site that provides the content necessary for the DCDP and download the desired content to the computer of the user, and then save the content in an external device again.

WO-A-01 /38993 describes according to the pre-characterising part of claim 1 appended hereto.

A method according to the present invention is defined by claim 1 appended hereto.

Preferably, a method according to the present invention includes authenticating the source of said request and the requested content is only sent if the source of said request is successfully authenticated.

Preferably, said request comprises a request for a plurality of content entities and the requested content entities are only if it is determined at the server apparatus that each requested entity may be sent on the basis of said id.

According to the present invention, there is also provided a server apparatus configured to perform a method according to the present invention.

According to the present invention, there is provided a content delivery system defined by claim 15 appended hereto.

Preferably, lookup means is provided for selecting an address of a server apparatus, according to the present invention, in dependence on an id, received by said id receiving means, and the network communication means is configured to send requests to addresses obtained from the lookup means.

Preferably a client apparatus according to the present invention comprises a computer having a network interface controller or modem, an I/O interface and user input means, the id receiving means consisting of the I/O interface and software run by said computer and the network communication means comprising the network interface controller or a modem and software being run said computer.

An embodiment of the present invention will now be described, by way of example, with reference to Figures 2 to 6 of the accompanying drawings, in which:
Figure 1 is a flowchart illustrating a conventional Internet content download method;
Figure 2 is a block diagram illustrating a content download system according to the present invention;
Figure 3 is a block diagram illustrating the configuration of a digital convergence disk player (DCDP) for recording data on a digital convergence disk (DCD) or playing data that has been recorded on the DCD;
Figure 4 is a block diagram illustrating the internal configuration of a register unit in the engine unit of the DCDP of Figure 3;
Figure 5 is a plane view showing one side of a DCD; and
Figure 6 is a flowchart illustrating a content downloading method in accordance the present invention.

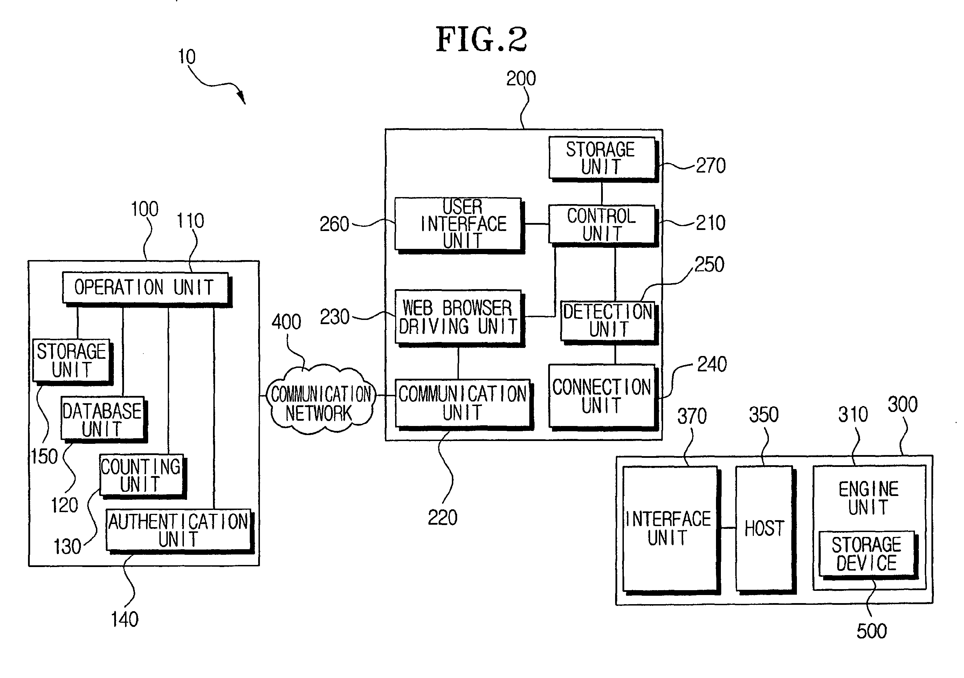

Referring to Figure 2, a content downloading system 10 includes a server device 100, a user terminal device 200 and a media device 300. The server device 100 and the user terminal device 200 are connected to each other via a communication network 400.

The server device 100 includes a database unit 120 storing the content, an authentication unit 140 for authenticating received device identifiers, a storage unit 150 storing data on the registration status of device identifiers, a possible download count corresponding to the device identifiers and/or environment to download, and an operation unit 110 for transmitting content, which is associated with a received device identifier as a result of searching the contents of the database unit 120, to the user terminal device 200, when the authentication unit 140 has authenticated the device identifier.

Upon a receipt of a device identifier of the media device 300 from the user terminal device 200 through the communication network 400, the operation unit 110 outputs a control signal to the authentication unit 140 to conduct an authentication operation upon the device identifier transmitted. According to the control signal inputted by the operation unit 110, the authentication unit 140 authenticates the corresponding device identifier if a record exists that the subject device identifier has been properly registered. The operation unit 110 then searches the environment to download that is stored in the storage unit 150, and transmits the content corresponding to the device identifier to the user terminal device 200 according to the authentication result.

The server device 100 may further include an accounting unit 130 for managing downloads for content identical to content on the media device 300 corresponding to the device identifier that has been transmitted. In such a case, the possible download count allocated to the media device 300, which is represented by a device identifier, may be stored into the storage unit 150.

The operation unit 110 receives the device identifier from the user terminal device 200, and when a request for a download of specific content occurs, the operation unit 110 requests the download count for the transmission of the same content associated with the received device identifier up to the present from the accounting unit 130. Meanwhile, the accounting unit 130 includes information on the number of times the same content may be transmitted in respect of the received device identifier and the accounting unit 130 outputs the count to the operation unit 110, as requested. Further, if the user terminal device 200, corresponding to the received device identifier, repeatedly requests downloading of content that has already been downloaded, the accounting unit 130 counts the downloads.

For example, if a permitted download count is set to three, and the media device 300 already received three downloads of the same content, the accounting unit 130 notifies the operation unit 110 that no more downloading of this contents is permissible. The operation unit 110 then transmits a message such as "Maximum Downloads Exceeded" to the user terminal device 200, thereby informing the user that the user cannot download the content any more. Furthermore, when the operation unit 110 repeatedly receives a request for the download of the same contents from the user, the operation unit 110 transmits the number of permitted downloads remaining to the user terminal device 200.

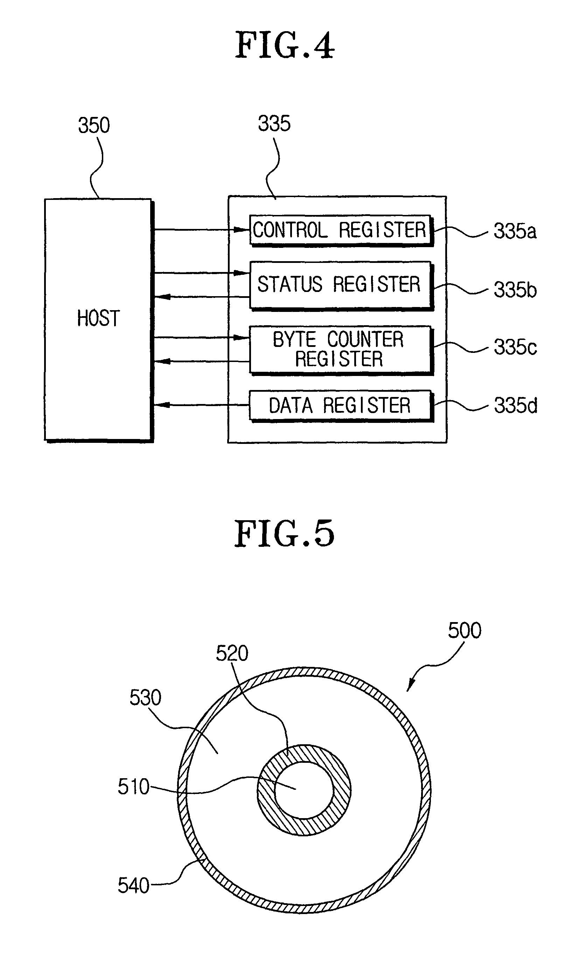

In the contents downloading system, the user terminal device 200 could be implemented as a computer, a communicator, a PDA or a mobile phone. The content downloading system includes a control unit 210, a communication unit 220, a web browser driving unit 230, a connection unit 240, a detection unit 250, a user interface unit 260 and a storage unit 270. The user terminal device 200, when implemented by a computer, will now be explained. Furthermore, the media device 300 can be a DCDP (Digital Convergence Disk Player) or an MP3 player storing song data in solid state electronic memory. The following illustrates the case where the media device 300 is a DCDP and the storage device 500, as shown in Figure 5, is a DCD.

The communication unit 220 is connected to the communication network 400, for instance the Internet, and transmits data to and receives data from the server device 100. The server device 100 connected to the communication unit 220 may be a web server, but may further provide optional functions such as an FTP server.

A web browser driving unit 230 drives a web browser and connects to the server device 100 corresponding to the device identifier of an individual DCDP media device 300. Each device identifier of the DCDP media device 300 is stored in the storage unit 270 of the personal computer 200, and the IP address of a server device corresponding to each device identifier is linked in the form of bookmarks. When the control unit 210 receives the device identifier from the DCDP media device 300, the control unit 210 outputs a command signal commanding the web browser driving unit 230 to drive the web browser. The web browser driving unit 230 then operates according to input control signals and connects to the server device 100 associated with a received device identifier.

The connection unit 240 enables a detachable DCDP media device 300 to be connected. The connection unit 240 can be either a parallel port or a serial port, for example a universal serial bus (USB). The connection unit 240 carries data between the user terminal 200 and DCDP media device 300. Furthermore, the connection unit 240 could include a Bluetooth chip that communicates wirelessly with the DCDP media device 300.

The detection unit 250 detects the connection status of the DCDP media device 300. The detection unit 250 employ a voltage sensor, which is connected to the connection unit 240, or a separate stand-alone sensor. The detection unit may be incorporated into the software as well.

When the connection unit 240 includes a Bluetooth chip, the detection unit 250 is implemented in the Bluetooth system. In such a case, the detection unit 250 allows the personal computer 200 to make address inquiries and call actions to set up a wireless communication environment, and also allows the DCDP media device 300 to respond to inquiries about addresses and calls.

The user interface unit 260 outputs at least parts of the contents downloaded from the server device 100, and to which, the environment to select or download the contents to be saved into the DCDP media device 300 is inputted by the user. The user may search a list of the downloaded content or read the downloaded content through the user interface unit 260, may select the content desired to be saved into the DCDP media device 300 among the downloaded content, or may input the environment to transmit to the server device 100.

The control unit 210 controls operations of each of the configuration elements, and upon the receipt of the device identifier of the DCDP media device 300 through the connection unit 240, the control unit transmits the device identifier to the server device 100 through the communication unit 220. Furthermore, the control unit 210 outputs a control signal to the storage unit 270 to store the content that is transmitted from the server device 100 through the communication unit 220, or transmits the content to the DCDP media device 300. The storage unit 270 can be an fixed storage medium, such as a hard disk, or a removable storage medium such as a floppy disk.

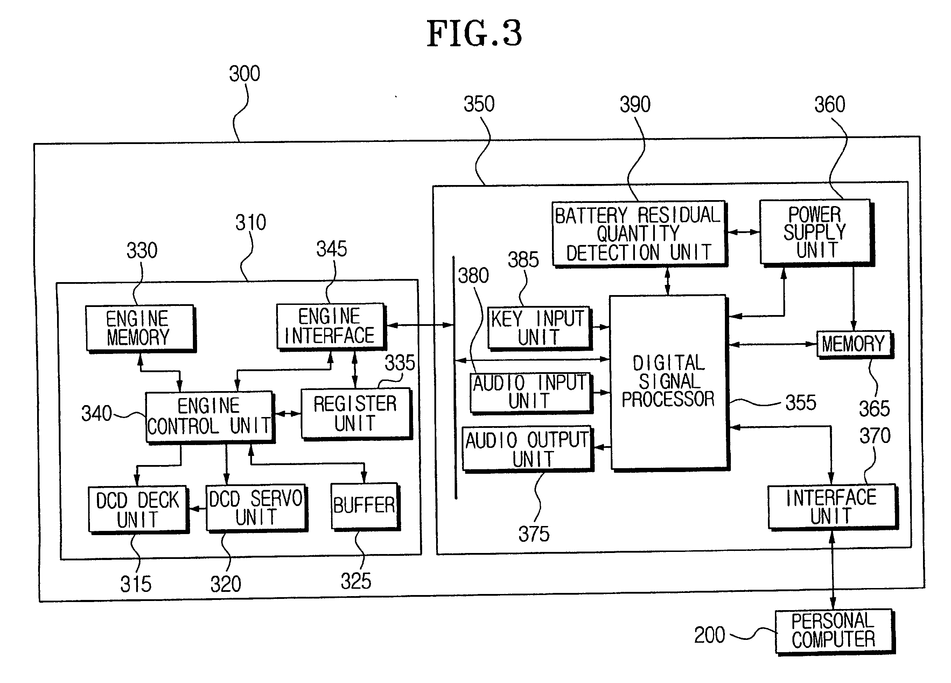

Referring to Figure 3, the DCDP media device 300 includes an engine unit 310 and a host 350.

The engine unit 310 is a DCD driver for recording and reading data on a DCD 500. The host 350 is connected to the engine unit 310 and controls the engine unit 310. The host 350 can be connected to the personal computer 200 and thereby control the engine unit 310.

The engine unit 310 includes a DCD deck unit 315, a DCD servo 320, a buffer 325, an engine memory 330, an engine control unit 340, and an engine interface 345. When a DCD is inserted into the engine unit 310, the DCD deck unit is controlled by the engine control unit 340 and the DCD deck unit records and/or reproduces data on the DCD 500. The engine control unit 340 transmits and receives data using a digital signal processor (DSP) 355 of the host 350 through the engine interface unit 345. The DCD servo unit 320 drives the DCD deck unit 315 under the control of the engine control unit 340. Under the control of the engine control unit 340, the DCD deck unit 315 reads out data from the DCD 500.

The buffer 325 stores the data temporarily, when the data on the DCD 500 are recorded and played, and the buffer 325 can be an SRAM (Static Random Access Memory). The engine memory 330 stores all commands that are shared with the DCD 500, the engine unit 310 and the host 350, stores data for control and uses flash memory (flash RAM). The engine control unit 340 controls the DCD deck unit 315, the DCD servo 320 and the buffer 325. The engine interface 345 provides an interface between the engine unit 310 and the host 350.

The host 350 includes the DSP 355, a power supply unit 360, a memory 365, an interface 370, an audio output unit 375, an audio input unit 380, a key input unit 385 and a battery residual quantity detection unit 390.

The DSP 355 connects to the engine interface 345 and accesses the engine unit 310 to record and read data and controls the playing of read data and controls the DCDP media device 300. Moreover, the DSP 355 controls the DCDP 300 for processing data files to be properly played/recorded in accordance with the characteristics of the data that are read out in a file unit.

The power supply unit 360 includes a main battery (not shown) and a backup battery (not shown). The main battery supplies power driving the DCDP media device 300. The backup battery supplies power to the memory 365 and maintain its contents when power to the DCDP media device 300 is turned off. The battery residual quantity detection unit 390 detects the remaining charge of the main battery and sends the result to the DSP 355.

The memory 365, under the control of the DSP 355, receives recording time information data and directory information for recorded files from the DCD, and stores the recording time information data and the directory information for the recorded files.

The interface unit 370 is the interface between the DCDP media device 300 and the personal computer 200. The interface can be a parallel port or some other form of serial port. The interface unit 370 could be a wireless interface device such as a Bluetooth chip. The interface unit 370 transmits the data between the DCDP media device 300 and the personal computer 200.

The audio output unit 375 outputs audio data, reproduced from the DCD 500, and messages that are generated from DSP 355. The audio input unit 380 processes a voice command input by the user and transmits the processed command to the DSP 355. The user can input commands, using a key input unit 385, to the DCDP media device 300 as well.

The engine unit 310 includes a register unit 335 with four registers.

Referring to Figure 4, the register unit 335 includes a control register 335a, a status register 335b, a byte counter register 335c, and a data register 335d. Each register 335a -335d is used for communication with the host 350. The host 350 selects one register in the register unit 335 to access in accordance with an address bit being 2 bits (DPI_ADD0 and DPI_ADD1). The host 350 performs the recording operation on the control register 335a, and the engine unit 310 performs the readout operation.

The control register 335a has a function control and interface interrupt enable/disable values that are recorded by the host 350. The host 350 performs only the readout operation, and the engine unit 310 performs the recording and the readout operations on the status register 335b. The status register 335b possesses the status data and the causes of interrupts. Meanwhile, the host 350 and the engine unit 310 perform both recording and readout operations on the byte counter register 335c, with the exception that the host 350 can only perform recording operations on the byte counter register 335c when a busy bit of the status register 335b is clear, and if the data bit of the status register 335b is set, the host 350 reads out return valid information from the byte counter register 335c.

The byte counter register 335c includes a byte counter for transmission of a next command, data or a status phase. The host 350 and the engine unit 310 perform both recording and readout operations on the data register 335d, with the exception that the host 350 records data in the data register 335d to transmit the data to the engine unit 310 during a command phase and a data read out phase, while the host 350 reads the data register 335d to transmit the data from the engine unit 310 during a status phase and a data read in phase.

There exist four layers between the host 350 and the engine unit 310, for example a physical layer which connects the host 350 and the engine unit 310 physically, a data link layer which defines a method for data exchange, a command layer which carries commands related to the data on the DCD 500 to control the data accessed by the engine unit 310 and an application layer which includes a file data/meta data mapping and a user interface. By providing a connection status for each of the four layers, the file data/meta data recorded in the DCD 500 operated by the engine unit 310 can improve transmission to the host 350 to be processed.

Referring to Figure 5, the DCD 500 has a circular plate shape and, from the centre outwards, the DCD 500 is divided into a hole part 510, a unique number recording part 520, a data recording part 530 and a file system recording part 540.

The hole part 510 is formed in the centre of the DCD 500 and the hole part 510 keeps the DCD 500 from severely shaking while in rotation. The unique number recording part 520 of the DCD 500 surrounds a certain designated portion of the hole part 510, thereby taking on a ring-like shape. The unique number given to every DCD 500 is recorded in the unique number recording part 520 to distinguish each of the DCDs 500 from every other. Furthermore, the unique number recording part 520 includes information distinguishing one side of the DCD 500 from the other side, which is possible because of the double-sided recordable PhotoRecord medium used. The data recording part 530 can include, for example music data, document data and picture data and occupies most of the DCD capacity.

The file system recording part 540 surrounds an outer part of the DCD 500 thereby taking on a ring-like shape. The file system recording part 540 includes data on every file recorded in the data recording part 530, including file system data and directory data. The file system data indicates the sizes of the files recorded in the data recording part 530 of the DCD 500, their names, recording dates and recording times, file formats, directory data, last modified dates and times, etc. The directory data indicates the space to save relevant files in a group. Irrelevant files are saved in another directory so that relevant and irrelevant files do not co-mingle with each other.

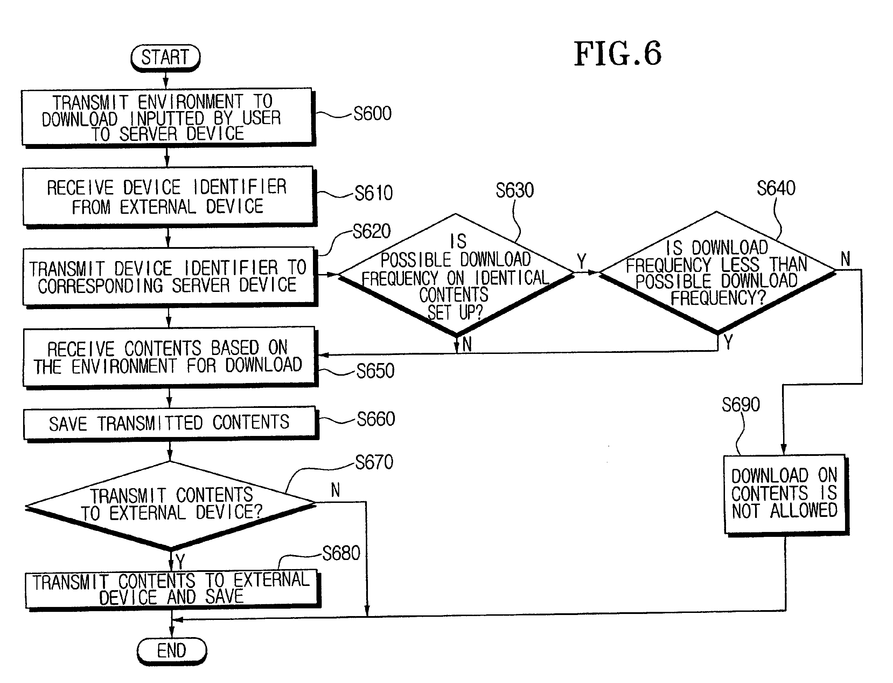

Referring to Figure 6, using the personal computer 200, the user connects to the server device 100 that provides contents. Then the user inputs the environment to download including the device identifier, a field of the content which the user desires to download, etc. (S600). At this time, the personal computer 200 should be connected to the DCDP media device 300, which transmits the device identifier that is stored in the engine memory 330 to the personal computer 200. Therefore, the user does not input the device identifier, but the DCDP media device 300 transmits the device identifier to the server device 100 via the personal computer 200. The control unit 210 in the personal computer 200 then transmits the environment to download, which the user input to the server device 100 through the communication unit 400.

The operation of inputting the environment to download takes place when the user first connects to the server device 100 providing content on the corresponding DCDP media device 300. Meanwhile, the user can change the environment to download after the user connected to the server device 100. The environment to download is stored in the storage unit 150 of the server device 100. Besides the environment described above, the storage unit 150 stores the necessary information to download content to the DCDP media device 300, such as information on the registration status of the device identifier and the possible download frequency of the device identifier, etc.

After operation (S600) completing the registration of the device identifier, when the content from the server device 100 is downloaded, and the DCDP media device 300 is connected to the connection unit 240, the device identifier stored in the DCDP media device 300 is transmitted to the user personal computer 200 through the connection unit 240 (S610). At this time, the detection unit 250 ensures that the DCDP media device 300 is properly connected and the control unit 210 reads out the device identifier stored in the DCDP media device 300. The operation S610, as described above, is not carried out for the first registration of the DCDP media device 300.

However, to transmit the device identifier at the time of connecting the DCDP media device 300 to the personal computer 200 is possible. In such a case, the host 350 in the DCDP media device 300 outputs the command (DICMD_DEVICE_INFO) to the engine unit 310 for transmission of the device identifier. Upon the receipt of the device identifier transmission command from the host 350, the engine unit 310 reads out the device identifier that is stored in the engine memory 330 and transmits the device identifier to the host 350. Table 1 is an example of data structures in the engine memory. In Table 1, EngineNum is a device identifier.

| Byte Offset | Field Name | Data format | Value | Descriptions |
|---|---|---|---|---|
| 0 | Device Type | U8 | 0 x 01 | Device form |
| 1 | Reserved 1 | U8 | 0 x 00 | Pad |
| 2 | Reserved 2 | U8 | 0 x 00 | Pad |
| 3 | Reserved 3 | U8 | 0 x 00 | Pad |
| 4-23 | Device ID | String <20> | | Indicate engine ID as ASCII String. |
| 24-31 | Firmware | String <8> | | Firmware version |
| 32-33 | Packet Size | U16 | | Current packet size |
| 34-35 | MaxPacketSize | U16 | | Maximum packet size |
| 36-37 | CommandRev | U16 | | Command set version number |
| 38-39 | SpinUpCurrent | String <2> | | Current Skip Up Current Limit |
| 40-43 | HostReadRate | U32 | | Reading speed of Host |
| 44-47 | HostWriteRate | U32 | | Writing speed of Host |
| 48-51 | TimeStamp | U32 | | Present time on the standard of 1970. 1. 1. |
| 52-53 | SkipSec | U16 | | |
| 54-73 | EngineNum | String <20> | | Unique number of an Engine |
| 74-79 | ContentKeyVersion | String <6> | | |

If the connection unit 240 is a Bluetooth chip, the detection unit 250 allows the personal computer 200 to make the address enquiry operation and the call operation, or has the media device 300 respond to the address einquiry operation and the call operation and the detection unit 250 can be installed in the connection unit 240.

The control unit 210 transmits the device identifier, that has been transmitted through the connection unit 240, to the server device 100 through the communication unit 220 (S620). The personal computer 200 may contain at least one device identifier and an IP address of a server device for each device identifier.
In such a case, the control unit 210, upon receiving the device identifier through the connection unit 240, transmits the device identifier to a server device using the associated IP address and the web browser driving unit 230 drives the web browser according to the device identifier.

The operation unit 110 of the server device 100 confirms whether a permitted download count for the device identifier transmitted for the same content has been set up (S630). If the permitted download count has been set up, the operation unit 110 enquires of the accounting unit 130 whether the current download count for the same content is less than the designated permitted download count (S640).

When the permitted download count has not been set up or the download count for the same content is less than the designated permitted download count, the server device 100 transmits the requested content to the personal computer 200 in accordance with the environment to download (S650). However, if the download count is equal to or greater than the permitted download count, the server device 100 does not permit downloading for the requested content (S690).

The control unit 210 of the personal computer 200 outputs a control signal to store the contents transmitted into the storage unit 270 (S660). At this time, the user can decide whether or not to save the downloaded content into the DCDP media device 300 (S650). Meanwhile, the control unit 210 can choose to save the contents into the storage unit 270 in accordance with the designated status of the environment to download, or to transmit the contents directly to the DCDP media device 300 without saving.

In the case that the downloaded content is designated to be saved in the DCDP media device 300, the control unit 210 transmits the content, which the user selected, to the DCDP media device 300 through the connection unit 240, and the host of the DCDP media device 300 stores the transmitted content into the DCD 500 that is inserted in the engine unit 310, where the engine unit 310 records the transmitted content on the DCD 500 (S680).

Thus far, only the media device 300 using the DCDP has been explained. However, the media device can be any type of media device with a unique device identifier, such as an MP3 player, or an ebook.

The user can download any content that the user desires by the environment to download the content the user previously designated, without completing unnecessary procedures, for example operating the web browser, web surfing, or selecting the contents the user desires to download, by connecting simultaneously to a detachable media device and to a web site based on the device identifier transmitted from the media device.

Further, since a media device like DCDPs, MP3 players and the ebooks have respective file formats necessary for the device in general, the user can be automatically connected to the web site that provides the content required for each media device according to the device identifier of the media device as the user connects to the media device, which greatly helps the user to download more conveniently. Furthermore, designating the same possible download frequency for the media devices with the identical device identifier, the media device having a single device identifier can download the identical contents within the range of the designated frequency.

## Claims

1. A method of operating a server apparatus for delivering content to a media device (300), via a communication network (400), wherein the media device (300) includes a data storage medium (500) having a unique id applied thereto, and in response to receiving a request for a content entity at the server apparatus, the method comprises:
receiving said unique id in association with said request,
determining, at the server apparatus (100), whether to send the requested content using said unique id, and
downloading the requested content entity from the server apparatus to the media device (300) if it is determined to send the requested content, **characterised by** setting a maximum permitted number of downloads for said content entity in respect of said id and updating a record of downloads of said content entity in respect of said id in response to said request, wherein said entity is only sent if said maximum number of downloads has not been exceeded.

2. A method according to claim 1, including authenticating the source of said request, wherein the requested content entity is only sent if the source of said request is successfully authenticated.

3. A method according to either one of claims 1 or 2, wherein said request comprises a request for a plurality of content entities and the requested content entities are only sent if it is determined at the server apparatus that each requested entity may be sent on the basis of said id.

4. A method according to claim 1, comprising:
receiving the unique id from the media device (300) that is detachable.

5. A method according to claim 4, further comprising:
connecting to the server (100) by driving a web browser (230) corresponding to the unique id after receiving the unique id from the detachable media device (300).

6. The method according to claim 4, further comprising:
transmitting, to the server (100), an environment to download input by a user prior to receiving the unique id from the media device (300), wherein the contents to be transmitted is selected in accordance with the environment to download corresponds to the unique id.

7. The method according to claim 6, wherein the environment to download includes the unique id and/or a category of the contents to be provided.

8. The method according to claim 4, further comprising:
detecting the connection status of the media device (300); and
requesting transmission of the unique id from the detected media device (300), prior to receiving the unique id from the media device (300).

9. The method according to claim 4, further comprising:
transmitting the contents selected by a user to the media device (300).

10. The method according to claim 1, comprises in the server (100):
storing the contents in a database (120);
authenticating the transmitted unique id in an authentication unit (140); and
storing the registration status of the unique id, the permitted download frequency for the unique id and/or an environment to download the unique id.

11. The method according to claim 1, further comprising:
searching the contents corresponding to the unique id from the database (120); and
transmitting the contents to the user terminal device (200) if the unique id is authenticated.

12. The method according to claim 1, comprising:
receiving the unique id from the media device (300);
transmitting the unique id to the server (100) that provides contents; and
simultaneously connecting to the media device (300) and to the server (100) based on the unique id transmitted from the media device (300) to receive selected portions of the contents.

13. The method according to claim 1, comprising:
receiving the unique id from the media device (300);
transmitting the unique id to the server (100) that provides contents; and
automatically and selectively connecting to the media device (300) and to the server (100) based on the unique id transmitted from the media device (300); and
receiving the contents in a format of the media device (300) based on the unique id transmitted from the media device (300).

14. A server apparatus configured to perform a method according to any preceding claim.

15. A content delivery system including a client apparatus (200) and a server apparatus (100) according to claim 14, wherein the client apparatus (200) comprises:
id receiving means (240) to receive a unique id signal from a data storage medium (500);
user input means (260) to receive user inputs identifying a content entity;
network communications means (400) for sending a request for a content entity, identified by means of said user input means (300), and an id, received by said id receiving means (240), to the server apparatus.

16. A content delivery system according to claim 15, wherein the client apparatus (200) includes lookup means (270) for selecting an address of the server apparatus (100), in dependence on an id, received by said id receiving means (240), wherein the network communication means (400) is configured to send requests to addresses obtained from the lookup means (270).

17. A content delivery system according to claim 15 or 16, wherein the client apparatus (200) comprises a computer having a network interface controller (220) or modem, an I/O interface and user input means (260), the id receiving means (240) consisting of the I/O interface and software being run by said computer and the network communication means (400) comprising the network interface controller (220) or a modem and software being run by said computer.

18. A content delivery system according to claim 15, comprising:
a media device (300) reproducing/recording the contents and transmitting/receiving data with the client device (200), wherein
the client device (200) is connected to the media device (300) which transmits the unique id received from the media device (300) to the server apparatus (100), downloading the contents corresponding to the unique id of the media device (300) from the server apparatus (100), and transmitting the contents to the media device (300).

19. The system according to claim 18, wherein the server apparatus (100) comprises:
a database unit (120) storing the contents;
an authentication unit (140) performing an authentication operation on the transmitted unique id;
a storage unit (150) storing the registration status of the unique id, a permitted download frequency for the unique id, and/or an environment to download for the unique id; and
an operation unit (110) searching the contents corresponding to the unique id from the database (120), and transmitting the contents to the user terminal device (200) if the unique id transmitted from the authentication unit (140) is authenticated.

20. The system according to claim 19, further comprising:
a counting unit (130) managing the permitted download frequency of the contents corresponding to the unique id from the media device (300) such that when a user downloads identical content attributed to the unique id, the operation unit (110) determines whether the download frequency corresponding to the identical contents attributed to the unique id is greater than or equal to the permitted download frequency of the identical content attributed to the unique id, and if the download frequency corresponding to the identical contents attributed to the unique id is greater than or equal to the possible download frequency of the identical content attributed to the unique id then the operation unit (110) does not download the identical contents.

21. The system according to claim 19, further comprising:
a counting unit (130) managing the permitted download frequency of the contents corresponding to the unique id from the media device (300), such that when a user downloads identical content attributed to the unique id, the operation unit (110) deducts from the permitted download frequency a frequency of downloads of the identical content attributed to the unique id, as a remaining download frequency, and if the user attempts to download an identical contents attributed to the unique id when the remaining possible download frequency of the identical content attributed to the unique id is equal to a predetermined value, the operation unit (110) refuses downloading.

22. The system according to claim 19, wherein the environment to download the contents includes the unique id of the media device (300) and/or a category of the contents to be provided.

23. The system according to claim 15, wherein the id receiving means (240) is a connection unit (240), connected to the media device (300) and the user terminal device (200) comprises a control unit (210) configured to transmit the unique id received from the connection unit (240) to the server apparatus (100) through a communication unit (220).

24. The system according to claim 23, wherein the connection unit (240) transmits/receives data with the media device (300) via wireless communication.

25. The system according to claim 23, further comprising:
a detection unit (250) detecting the connection status of the media device (300), wherein the control unit (210) requests the media device for transmission of the unique id, when the detection unit (250) detects that the media device (300) is connected to the connection unit (240).

26. The system according to claim 25, wherein the connection unit (240) is a bluetooth chip and the detection unit (250) is provided on the bluetooth chip such that the detection unit (250) allows the user terminal device (200) to make address inquiries and call actions to set up a wireless communication environment.

27. The system according to claim 24, further comprising:
a user interface unit (260) for a user to input an environment to download, wherein the control unit (210) transmits the environment to download inputted by the user to the server apparatus (100) through the communication unit (220).

28. The system according to claim 27, wherein the control unit transmits contents, selected by the user from the contents downloaded based on the unique id and the environment, through the connection unit (240).

29. The system according to claim 28, wherein the environment to download the contents includes the unique id of the media device (300) and/or a category of the contents to be provided.

30. The system according to claim 18, wherein the media device (300) comprises:
an engine unit (340) performing a recording operation of data to a disk and a readout operation of the data from the disk, and transmitting the stored unique id; and
a host (350) controlling the engine unit (340), transmitting the unique id to the server apparatus (100) through the user terminal device (200), and receiving the contents.

31. The system according to claim 30, wherein the engine unit (340) comprises:
a DCD deck unit (315), to which the disk is inserted, recording data to the disk and/or reading out the data from the disk;
a DCD servo (320) driving the DCD deck unit (315);
a buffer (325) temporarily storing the data to be recorded and reproduced;
an engine memory (330) storing code values of commands that are shared with the disk and/or the host (350), control data, and the unique id;
an engine control unit (340) controlling the DCD deck unit (315) when the disk is inserted, and outputting a control command to transmit the unique id to the user terminal device (200) when the media device (300) is connected to the user terminal device (200); and
an engine interface (345) transmitting and receiving the command and data with the host (350).

32. The system according to claim 30, wherein, the host (350) comprises:
a digital signal processing unit (355), connected to the engine interface (345), controlling recording/reading out operation of data by accessing the engine unit (340), controlling the unique id transmitting operation that performs a reproducing operation of the read out data and transmits the unique id, and controlling the media device (300) reproducing/recording files according to attributes of the data;
a memory unit (365) storing recording time information and directory data of a file received from the disk;
an interface unit (370) transmitting and receiving the data from the user terminal device (200); and
an audio output unit (375) outputting the audio data reproduced from the disk, and outputting messages generated by the digital signal processing unit (355).

33. The system according to claim 32, wherein the host (350) further comprises
a detection unit (390) detecting a remaining charge of a main battery and sending a result to the digital signal processing unit (355).

## Patentansprüche

1. Verfahren zum Betreiben einer Server-Vorrichtung, mit der Inhalt zu einer Medien-Einrichtung (300) über ein Kommunikationsnetzwerk (400) geliefert wird, wobei die Medien-Einrichtung (300) ein Datenspeichermedium (500) enthält, dem eine eindeutige Kennung zugewiesen ist, und das Verfahren in Reaktion auf Empfangen einer Anforderung eines Inhaltselementes an der Server-Vorrichtung umfasst:
Empfangen der eindeutigen Kennung in Zusammenhang mit der Anforderung,
unter Verwendung der eindeutigen Kennung Feststellen an der Server-Vorrichtung (100), ob der angeforderte Inhalt gesendet werden soll, und
Herunterladen des angeforderten Inhaltselementes von der Server-Vorrichtung zu der Medien-Einrichtung (300), wenn festgestellt wird, dass der angeforderte Inhalt gesendet werden soll, **dadurch gekennzeichnet, dass** eine maximal zulässige Anzahl von Herunterlade-Vorgängen für das Inhaltselement in Bezug auf die Kennung festgelegt wird und ein Protokoll von Herunterlade-Vorgängen des Inhaltselementes in Bezug auf die Kennung in Reaktion auf die Anforderung aktualisiert wird, wobei das Element nur gesendet wird, wenn die maximale Anzahl von Herunterlade-Vorgängen nicht überschritten worden ist.

2. Verfahren nach Anspruch 1, das Authentifizieren der Quelle der Anforderung einschließt, wobei das angeforderte Inhaltselement nur gesendet wird, wenn die Quelle der Anforderung erfolgreich authentifiziert wird.

3. Verfahren nach einem der Ansprüche 1 oder 2, wobei die Anforderung eine Anforderung einer Vielzahl von Inhaltselementen umfasst und die angeforderten Inhaltselemente nur gesendet werden, wenn auf Basis der Kennung an der Server-Vorrichtung festgestellt wird, dass jedes angeforderte Element gesendet werden kann.

4. Verfahren nach Anspruch 1, das umfasst:
Empfangen der eindeutigen Kennung von der Medien-Einrichtung (300), die abgetrennt werden kann.

5. Verfahren nach Anspruch 4, das des Weiteren umfasst:
Herstellen von Verbindung mit dem Server (100) durch Ansteuern eines Web-Browsers (230) entsprechend der eindeutigen Kennung nach Empfangen der eindeutigen Kennung von der abtrennbaren Medien-Einrichtung (300).

6. Verfahren nach Anspruch 4, das des Weiteren umfasst:
Senden einer Umgebung zum Herunterladen, die durch einen Benutzer vor Empfangen der eindeutigen Kennung von der Medien-Einrichtung (300) zu dem Server (100) eingegeben wird, wobei der zu sendende Inhalt gemäß der Umgebung zum Herunterladen ausgewählt wird und der eindeutigen Kennung entspricht.

7. Verfahren nach Anspruch 6, wobei die Umgebung zum Herunterladen die eindeutige Kennung und/oder eine Kategorie des bereitzustellenden Inhalts enthält.

8. Verfahren nach Anspruch 4, das des Weiteren umfasst:
Erfassen des Verbindungsstatus der Medien-Einrichtung (300); und
Anfordern von Senden der eindeutigen Kennung von der erfassten Medien-Einrichtung (300) vor Empfangen der eindeutigen Kennung von der Medien-Einrichtung (300).

9. Verfahren nach Anspruch 4, das des Weiteren umfasst:
Senden des durch einen Benutzer ausgewählten Inhalts zu der Medien-Einrichtung (300).

10. Verfahren nach Anspruch 1, das in dem Server (100) umfasst:
Speichern des Inhalts in einer Datenbank (120);
Authentifizieren der gesendeten eindeutigen Kennung in einer Authentifizierungseinheit (140); und
Speichern des Registrierungsstatus der eindeutigen Kennung, der zugelassenen Häufigkeit des Herunterladens für die eindeutige Kennung und/oder einer Umgebung zum Herunterladen der eindeutigen Kennung.

11. Verfahren nach Anspruch 1, das des Weiteren umfasst:
Suchen des Inhalts, der der eindeutigen Kennung entspricht, aus der Datenbank (120); und
Senden des Inhalts zu der Benutzer-Endgeräteinrichtung (200), wenn die eindeutige Kennung authentifiziert wird.

12. Verfahren nach Anspruch 1, das umfasst:
Empfangen der eindeutigen Kennung von der Medien-Einrichtung (300);
Senden der eindeutigen Kennung zu dem Server (100), der Inhalt bereitstellt; und
gleichzeitiges Herstellen von Verbindung mit der Medien-Einrichtung (300) und mit dem Server (100) auf Basis der von der Medien-Einrichtung (300) gesendeten eindeutigen Kennung, um ausgewählte Teile des Inhalts zu empfangen.

13. Verfahren nach Anspruch 1, das umfasst:
Empfangen der eindeutigen Kennung von der Medien-Einrichtung (300);
Senden der eindeutigen Kennung zu dem Server (100), der Inhalt bereitstellt; und
automatisches und selektives Herstellen von Verbindung mit der Medien-Einrichtung (300) und mit dem Server (100) auf Basis der von der Medien-Einrichtung (300) gesendeten eindeutigen Kennung; und
Empfangen des Inhalts in einem Format der Medien-Einrichtung (300) auf Basis der von der Medien-Einrichtung (300) gesendeten eindeutigen Kennung.

14. Server-Vorrichtung, die zum Durchführen eines Verfahrens nach einem der vorangehenden Ansprüche konfiguriert ist.

15. Inhalt-Liefersystem, das eine Client-Vorrichtung (200) und eine Server-Vorrichtung (100) nach Anspruch 14 enthält, wobei die Client-Vorrichtung (200) umfasst:
eine Kennungs-Empfangseinrichtung (240) zum Empfangen eines eindeutigen Kennungssignals von einem Datenspeichermedium (500);
eine Benutzereingabeeinrichtung (260) zum Empfangen von Benutzereingaben, die ein Inhaltselement identifizieren;
eine Netzwerk-Kommunikationseinrichtung (400), mit der eine Anforderung eines mittels der Benutzereingabeeinrichtung (300) identifizierten Inhaltselementes sowie eine durch die Kennungs-Empfangseinrichtung (240) empfangene Kennung zu der Server-Vorrichtung gesendet werden.

16. Inhalt-Liefersystem nach Anspruch 15, wobei die Client-Vorrichtung (200) eine Verweiseinrichtung (270) enthält, mit der eine Adresse der Server-Vorrichtung (100) in Abhängigkeit von einer durch die Kennungs-Empfangseinrichtung (240) empfangenen Kennung ausgewählt wird, und die Netzwerk-Kommunikationseinrichtung (400) zum Senden von Anforderungen an Adressen konfiguriert ist, die von der Verweiseinrichtung (270) bezogen werden.

17. Inhalt-Liefersystem nach Anspruch 15 oder 16, wobei die Client-Vorrichtung (200) einen Computer mit einem Netzwerkschnittstellen-Controller (220) oder Modem, einer I/O-Schnittstelle und einer Benutzereingabeeinrichtung (260) umfasst, die Kennungs-Empfangseinrichtung (240) aus der I/O-Schnittstelle und Software besteht, die durch den Computer ausgeführt wird, und die Netzwerk-Kommunikationseinrichtung (400) den Netzwerkschnittstellen-Controller (220) oder ein Modem und Software umfasst, die durch den Computer ausgeführt wird.

18. Inhalt-Liefersystem nach Anspruch 15, das umfasst:
eine Medien-Einrichtung (300), die den Inhalt wiedergibt/aufzeichnet und Daten mit der Client-Einrichtung (200) sendet/empfängt, wobei
die Client-Einrichtung (200) mit der Medien-Einrichtung (300) verbunden ist, die die von der Medien-Einrichtung (300) empfangene eindeutige Kennung zu der Server-Vorrichtung (100) sendet, den Inhalt entsprechend der eindeutigen Kennung der Medien-Einrichtung (300) von der Server-Vorrichtung (100) herunterlädt und den Inhalt zu der Medien-Einrichtung (300) sendet.

19. System nach Anspruch 18, wobei die Server-Vorrichtung (100) umfasst:
eine Datenbankeinheit (120), die den Inhalt speichert;
eine Authentifizierungseinheit (140), die eine Authentifizierungsoperation der gesendeten eindeutigen Kennung durchführt;
eine Speichereinheit (150), die den Registrierungsstatus der eindeutigen Kennung, einer zugelassenen Häufigkeit des Herunterladens für die eindeutige Kennung und/oder einer Umgebung zum Herunterladen für die eindeutige Kennung speichert; und
eine Operationseinheit (110), die den Inhalt entsprechend der eindeutigen Kennung aus der Datenbank (120) speichert und den Inhalt zu der Benutzer-Endgeräteinrichtung (220) sendet, wenn die von der Authentifizierungseinheit (140) gesendete eindeutige Kennung authentifiziert wird.

20. System nach Anspruch 19, das des Weiteren umfasst:
ein Zähleinheit (130), die die zulässige Häufigkeit des Herunterladens des Inhalts entsprechend der eindeutigen Kennung von der Medien-Einrichtung (300) so verwaltet, dass, wenn ein Benutzer identischen Inhalt herunterlädt, der der eindeutigen Kennung zugeordnet ist, die Operationseinheit (110) feststellt, ob die Häufigkeit des Herunterladens, die dem identischen Inhalt entspricht, der der eindeutigen Kennung zugeordnet ist, größer ist als oder genauso groß wie die zugelassene Häufigkeit des Herunterladens des identischen Inhalts, der der eindeutigen Kennung zugeordnet ist, und, wenn die Häufigkeit des Herunterladens, die dem identischen Inhalt entspricht, der der eindeutigen Kennung zugeordnet ist, größer ist als oder genauso groß wie die mögliche Häufigkeit des Herunterladens des identischen Inhalts, der der eindeutigen Kennung zugeordnet ist, die Operationseinheit (100) den identischen Inhalt nicht herunterlädt.

21. System nach Anspruch 19, das des Weiteren umfasst:
eine Zähleinheit (130), die die zulässige Häufigkeit des Herunterladens des Inhalts entsprechend der eindeutigen Kennung von der Medien-Einrichtung (300) so verwaltet, dass, wenn ein Benutzer identischen Inhalt herunterlädt, der der eindeutigen Kennung zugeordnet ist, die Operationseinheit (110) von der zugelassenen Häufigkeit des Herunterladens eine Häufigkeit von Herunterlade-Vorgängen des identischen Inhalts, der der eindeutigen Kennung zugeordnet ist, als eine verbleibende Häufigkeit des Herunterladens abzieht, und, wenn der Benutzer versucht, einen identischen Inhalt herunterzuladen, der der eindeutigen Kennung zugeordnet ist, wenn die verbleibende mögliche Häufigkeit des Herunterladens des identischen Inhalts, der der eindeutigen Kennung zugeordnet ist, einem vorgegebenen Wert gleich ist, die Operationseinheit (110) Herunterladen verweigert.

22. System nach Anspruch 19, wobei die Umgebung zum Herunterladen des Inhalts die eindeutige Kennung der Medien-Einrichtung (300) und/oder eine Kategorie des bereitzustellenden Inhalts einschließt.

23. System nach Anspruch 15, wobei die Kennungs-Empfangseinrichtung (240) eine Verbindungseinheit (240) ist, die mit der Medien-Einrichtung (300) verbunden ist, und die Benutzer-Endgeräteeinrichtung (200) eine Steuereinheit (210) umfasst, die zum Senden der von der Verbindungseinheit (240) empfangenen eindeutigen Kennung zu der Server-Vorrichtung (100) über eine Kommunikationseinheit (220) konfiguriert ist.

24. System nach Anspruch 23, wobei die Verbindungseinheit (240) Daten mit der Medien-Einrichtung (300) über Drahtloskommunikation sendet/empfängt.

25. System nach Anspruch 23, das des Weiteren umfasst:
eine Erfassungseinheit (250), die den Verbindungsstatus der Medien-Einrichtung (300) umfasst, wobei die Steuereinheit (210) die Medien-Einrichtung zum Senden der eindeutigen Kennung auffordert, wenn die Erfassungseinheit (250) erfasst, dass die Medien-Einrichtung (300) mit der Verbindungseinheit (240) verbunden ist.

26. System nach Anspruch 25, wobei die Verbindungseinheit (240) ein Bluetooth-Chip ist und die Erfassungseinheit (250) auf dem Bluetooth-Chip vorhanden ist, so dass es die Erfassungseinheit (250) der Benutzer-Endgeräteinrichtung (200) gestattet, Adressanfragen zu stellen und Vorgänge zum Einrichten einer Drahtloskommunikationsumgebung aufzurufen.

27. System nach Anspruch 24, das des Weiteren umfasst:
eine Benutzerschnittstelleneinheit (260) für einen Benutzer zum Eingeben einer Umgebung zum Herunterladen, wobei die Steuereinheit (210) die durch den Benutzer eingegebene Umgebung zum Herunterladen über die Kommunikationseinheit (220) zu der Server-Vorrichtung (100) sendet.

28. System nach Anspruch 27, wobei die Steuereinheit Inhalt, der durch den Benutzer aus dem heruntergeladenen Inhalt auf Basis der eindeutigen Kennung und der Umgebung ausgewählt wird, über die Verbindungseinheit (240) sendet.

29. System nach Anspruch 28, wobei die Umgebung zum Herunterladen des Inhalts die eindeutige Kennung der Medien-Einrichtung (300) und/oder eine Kategorie des bereitzustellenden Inhalts einschließt.

30. System nach Anspruch 18, wobei die Medien-Einrichtung (300) umfasst:
eine Engine-Einheit (340), die einen Aufzeichnungsvorgang von Daten auf eine Platte und einen Auslesevorgang der Daten von der Platte durchführt und die gespeicherte eindeutige Kennung sendet; und
einen Host (350), der die Engine-Einheit (340) steuert, die eindeutige Kennung über die Benutzer-Endgeräteinrichtung (200) zu der Server-Vorrichtung (100) sendet und den Inhalt empfängt.

31. System nach Anspruch 30, wobei die Engine-Einheit (340) umfasst:
eine DCD-Laufwerkeinheit (315), in die die Platte eingelegt wird, und die Daten auf die Platte aufzeichnet und/oder Daten von der Platte ausliest;
eine DCD-Servoeinrichtung (320), die die DCD-Laufwerkeinheit (315) steuert;
einen Puffer (325) zum temporären Speichern der aufzuzeichnenden und wiederzugebenden Daten;
einen Engine-Speicher (330), der Code-Werte von Befehlen, die gemeinsam mit der Platte und/oder dem Host (350) verwendet werden, Steuerdaten und die eindeutige Kennung speichert;
eine Engine-Steuereinheit (340), die die DCD-Laufwerkeinheit (315) steuert, wenn die Platte eingelegt wird, und einen Steuerbefehl zum Senden der eindeutigen Kennung zu der Benutzer-Endgerätvorrichtung (200) ausgibt, wenn die Medien-Einrichtung (300) mit der Benutzer-Endgeräteinrichtung (200) verbunden ist; und
eine Engine-Schnittstelle (345), die den Befehl und Daten mit dem Host (350) sendet und empfängt.

32. System nach Anspruch 30, wobei der Host (350) umfasst:
eine digitale Signalverarbeitungseinheit (355), die mit der Engine-Schnittstelle (345) verbunden ist, Aufzeichnungs-/Auslesevorgänge von Daten durch Zugreifen auf die Engine-Einheit (340) steuert, einen Vorgang des Sendens der eindeutigen ID steuert, mit dem ein Wiedergabevorgang der ausgelesenen Daten durchgeführt wird und die eindeutige Kennung gesendet wird, und die Medien-Vorrichtung (300) steuert, die Dateien entsprechend Attributen der Daten wiedergibt/aufzeichnet;
eine Speichereinheit (365), die Aufzeichnungszeitinformationen und Verzeichnisdaten einer von der Platte empfangenen Datei speichert;
eine Schnittstelleneinheit (370), die die Daten von der Benutzer-Endgerätvorrichtung (200) sendet und empfängt; und
eine Audio-Ausgabeeinheit (375), die die von der Platte wiedergegebenen Audiodaten ausgibt und Nachrichten ausgibt, die durch die digitale Signalverarbeitungseinheit (355) erzeugt werden.

33. System nach Anspruch 32, wobei der Host (350) des Weiteren umfasst:
eine Erfassungseinheit (390), die eine verbleibende Ladung einer Hauptbatterie erfasst und ein Ergebnis zu der digitalen Signalverarbeitungseinheit (355) sendet.

## Revendications

1. Procédé pour faire fonctionner un dispositif serveur afin de délivrer un contenu à un dispositif de support (300), via un réseau de communication (400), dans lequel le dispositif de support (300) inclut un support de mémorisation de données (500) auquel un id unique est appliqué et, en réponse à la réception d'une demande concernant une entité de contenu au niveau du dispositif serveur, le procédé comportant les étapes consistant à :
recevoir ledit id unique en association avec ladite demande,
déterminer, au niveau du dispositif serveur (100), s'il faut envoyer le contenu demandé en utilisant ledit id unique, et
télécharger l'entité de contenu demandée depuis le dispositif de serveur vers le dispositif de support (300) s'il est déterminé d'envoyer le contenu demandé, **caractérisé par** l'établissement d'un nombre autorisé maximum de téléchargements pour ladite entité de contenu eu égard audit id et la mise à jour d'un enregistrement de téléchargements de ladite entité de contenu eu égard audit id en réponse à ladite demande, dans lequel ladite entité est envoyée uniquement si ledit nombre maximum de téléchargements n'a pas été dépassé.

2. Procédé selon la revendication 1, incluant l'authentification de la source de ladite demande, dans lequel l'entité de contenu demandée est envoyée uniquement si la source de ladite demande est authentifiée avec succès.

3. Procédé selon l'une ou l'autre des revendications 1 et 2, dans lequel ladite demande comporte une demande pour une pluralité d'entités de contenu et les entités de contenu demandées sont envoyées uniquement s'il est déterminé au niveau du dispositif serveur que chaque entité demandée peut être envoyée sur la base dudit id.

4. Procédé selon la revendication 1, comportant l'étape consistant à :
recevoir l'id unique en provenance du dispositif de support (300) qui est amovible.

5. Procédé selon la revendication 4, comportant en outre l'étape consistant à :
se connecter au serveur (100) en commandant un navigateur de la toile mondiale (230) correspondant à l'id unique après la réception de l'id unique en provenance du dispositif de support amovible (300).

6. Procédé selon la revendication 4, comportant en outre l'étape consistant à :
transmettre, au serveur (100), un environnement de téléchargement d'une entrée par un utilisateur avant de recevoir l'id unique en provenance du dispositif de support (300), le contenu à transmettre étant sélectionné selon que l'environnement de téléchargement correspond à l'id unique.

7. Procédé selon la revendication 6, dans lequel l'environnement de téléchargement inclut l'id unique et/ou une catégorie du contenu à fournir.

8. Procédé selon la revendication 4, comportant en outre les étapes consistant à :
détecter l'état de connexion du dispositif de support (300), et
demander la transmission de l'id unique depuis le dispositif de support détecté (300), avant de recevoir l'id unique en provenance du dispositif de support (300).

9. Procédé selon la revendication 4, comportant en outre l'étape consistant à :
transmettre le contenu sélectionné par un utilisateur au dispositif de support (300).

10. Procédé selon la revendication 1, comportant dans le serveur (100) les étapes consistant à :
mémoriser le contenu dans une base de données (120),
authentifier l'id unique transmis dans une unité d'authentification (140), et
mémoriser l'état d'enregistrement de l'id unique, la fréquence de téléchargement autorisée pour l'id unique et/ou un environnement de téléchargement de l'id unique.

11. Procédé selon la revendication 1, comportant en outre les étapes consistant à :
rechercher le contenu correspondant à l'id unique depuis la base de données (120), et
transmettre le contenu au dispositif de terminal utilisateur (200) si l'id unique est authentifié.

12. Procédé selon la revendication 1, comportant en outre les étapes consistant à :
recevoir l'id unique en provenance du dispositif de support (300),
transmettre l'id unique au serveur (100) qui délivre le contenu, et
se connecter simultanément au dispositif de support (300) et au serveur (100) sur la base de l'id unique transmis par le dispositif de support (300) pour recevoir des parties sélectionnées du contenu.

13. Procédé selon la revendication 1, comportant en outre les étapes consistant à :
recevoir l'id unique en provenance du dispositif de support (300),
transmettre l'id unique au serveur (100) qui délivre le contenu, et
se connecter de manière automatique et sélective au dispositif de support (300) et au serveur (100) sur la base de l'id unique transmis par le dispositif de support (300), et
recevoir le contenu dans un format du dispositif de support (300) sur la base de l'id unique transmis par le dispositif de support (300).

14. Dispositif de serveur configuré pour mettre en oeuvre un procédé selon l'une quelconque des revendications précédentes.

15. Système de distribution de contenu incluant un dispositif client (200) et un dispositif serveur (100) selon la revendication 14, dans lequel le dispositif client (200) comporte :
des moyens de réception d'id (240) pour recevoir un signal d'id unique en provenance d'un support de mémorisation de données (500),
des moyens d'entrée utilisateur (260) pour recevoir des entrées utilisateur identifiant une entité de contenu,
des moyens de communication de réseau (400) pour envoyer une demande concernant une identité de contenu, identifiée par l'intermédiaire desdits moyens d'entrée utilisateur (300), et un id, reçu par lesdits moyens de réception d'id (240), au dispositif serveur.

16. Système de distribution de contenu selon la revendication 15, dans lequel le dispositif client (200) inclut des moyens de consultation (270) pour sélectionner une adresse du dispositif serveur (100), en fonction d'un id, reçu par lesdits moyens de réception d'id (240), les moyens de communication de réseau (400) étant configurés pour envoyer des demandes à des adresses obtenues par les moyens de consultation (270).

17. Système de distribution de contenu selon la revendication 15 ou 16, dans lequel le dispositif client (200) comporte un ordinateur ayant un contrôleur d'interface de réseau (220) ou un modem, une interface E/S et des moyens d'entrée utilisateur (260), les moyens de réception d'id (240) constitués de l'interface E/S et d'un logiciel étant exécutés par ledit ordinateur et les moyens de communication de réseau (400) comportant le contrôleur d'interface de réseau (220) ou un modem et un logiciel étant exécuté par ledit ordinateur.

18. Système de distribution de contenu selon la revendication 15, comportant :
un dispositif de support (300) reproduisant/enregistrant le contenu et transmettant/recevant des données à l'aide du dispositif client (200), dans lequel
le dispositif client (200) est connecté au dispositif de support (300) qui transmet l'id unique reçu en provenance du dispositif de support (300) au dispositif serveur (100), téléchargeant le contenu correspondant à l'id unique du dispositif de support (300) depuis le dispositif serveur (100), et transmettant le contenu au dispositif de support (300).

19. Système selon la revendication 18, dans lequel le dispositif serveur (100) comporte :
une unité de base de données (120) mémorisant le contenu,
une unité d'authentification (140) exécutant une opération d'authentification sur l'id unique transmis,
une unité de mémorisation (150) mémorisant l'état d'enregistrement de l'id unique, une fréquence de téléchargement autorisée pour l'id unique, et/ou un environnement de téléchargement pour l'id unique, et
une unité d'opération (110) recherchant le contenu correspondant à l'id unique depuis la base données (120), et transmettant le contenu au dispositif de terminal utilisateur (200) si l'id unique transmis par l'unité d'authentification (140) est authentifié.

20. Système selon la revendication 19, comportant en outre :
une unité de comptage (130) gérant la fréquence de téléchargement autorisée du contenu correspondant à l'id unique du dispositif de support (300) de sorte que lorsqu'un utilisateur télécharge un contenu identique attribué à l'id unique, l'unité d'opération (10) détermine si la fréquence de téléchargement correspondant au contenu identique attribué à l'id unique est supérieure ou égale à la fréquence de téléchargement autorisée du contenu identique attribué à l'id unique, et si la fréquence de téléchargement correspondant au contenu identique attribué à l'id unique est supérieure ou égale à la fréquence de téléchargement possible du contenu identique attribué à l'id unique, alors l'unité d'opération (110) ne télécharge pas le contenu identique.

21. Système selon la revendication 19, comportant en outre :
une unité de comptage (130) gérant la fréquence de téléchargement autorisée du contenu correspondant à l'id unique du dispositif de support (300) de sorte que lorsqu'un utilisateur télécharge un contenu identique attribué à l'id unique, l'unité d'opération (110) déduit de la fréquence de téléchargement autorisée une fréquence de téléchargement du contenu identique attribué à l'id unique, en tant que fréquence de téléchargement restante, et si l'utilisateur tente de télécharger un contenu identique attribué à l'id unique lorsque la fréquence de téléchargement possible restante du contenu identique attribué à l'id unique est égale à une valeur prédéterminée, l'unité d'opération (110) refuse le téléchargement.

22. Système selon la revendication 19, dans lequel l'environnement de téléchargement du contenu inclut l'id unique du dispositif de support (300) et/ou une catégorie du contenu à fournir.

23. Système selon la revendication 15, dans lequel les moyens de réception d'id (240) sont une unité de connexion (240), connectée au dispositif de support (300) et le dispositif de terminal utilisateur (200) comporte une unité de commande (210) configurée pour transmettre l'id unique reçu en provenance de l'unité de connexion (240) au dispositif serveur (100) via une unité de communication (220).

24. Système selon la revendication 23, dans lequel l'unité de connexion (240) transmet/reçoit des données à l'aide du dispositif de support (300) via une communication sans fil.

25. Système selon la revendication 23, comportant en outre :
une unité de détection (250) détectant l'état de connexion du dispositif de support (300), l'unité de commande (210) demandant la transmission de l'id unique au dispositif de support, lorsque l'unité de détection (250) détecte que le dispositif de support (300) est connecté à l'unité de connexion (240).

26. Système selon la revendication 25, dans lequel l'unité de connexion (240) est une puce bluetooth et l'unité de détection (250) est agencée sur la puce bluetooth de sorte que l'unité de détection (250) permet au dispositif de terminal utilisateur (200) d'effectuer des demandes d'adresse et d'appeler des actions pour configurer un environnement de communication sans fil.

27. Système selon la revendication 24, comportant en outre :
une unité d'interface utilisateur (260) destinée à un utilisateur pour entrer un environnement de téléchargement, l'unité de commande (210) transmettant l'environnement à télécharger entré par l'utilisateur au dispositif serveur (100) via l'unité de communication (220).

28. Système selon la revendication 27, dans lequel l'unité de commande transmet un contenu, sélectionné par l'utilisateur à partir du contenu téléchargé sur la base de l'id unique et de l'environnement, via l'unité de connexion (240).

29. Système selon la revendication 28, dans lequel l'environnement de téléchargement du contenu inclut l'id unique du dispositif de support (300) et/ ou une catégorie du contenu à fournir.

30. Système selon la revendication 18, dans lequel le dispositif de support (300) comporte :
une unité de moteur (340) exécutant une opération d'enregistrement de données sur un disque et une opération d'extraction des données du disque, et transmettant l'id unique mémorisé, et
un hôte (350) commandant l'unité de moteur (340), transmettant l'id unique au dispositif serveur (100) via le dispositif de terminal utilisateur (200), et recevant le contenu.

31. Système selon la revendication 30, dans lequel l'unité de moteur (340) comporte :
une unité de platine DCD (315), dans laquelle le disque est inséré, enregistrant des données sur le disque et/ou extrayant des données du disque,
une unité d'asservissement DCD (320) commandant l'unité de platine DCD (315),
un tampon (325) mémorisant temporairement les données à enregistrer et à reproduire,
une mémoire de moteur (330) mémorisant des valeurs de code d'instructions qui sont partagées avec le disque et/ou l'hôte (350), des données de commande, et l'id unique,
une unité de commande de moteur (340), commandant l'unité de platine DCD (315) lorsque le disque est inséré, et délivrant en sortie une instruction de commande pour transmettre l'id unique au dispositif de terminal utilisateur (200) lorsque le dispositif de support (300) est connecté au dispositif de terminal utilisateur (200) et
une interface de moteur (345) transmettant et recevant l'instruction et des données à l'aide de l'hôte.

32. Système selon la revendication 30, dans lequel l'hôte (350) comporte :
une unité de traitement de signal numérique (355), connectée à l'interface de moteur (345), commandant l'opération d'enregistrement/d'extraction de données en accédant à l'unité de moteur (340), commandant l'opération de transmission d'id unique qui exécute une opération de reproduction des données extraites et transmet l'id unique, et commandant le dispositif de support (300) reproduisant/enregistrant des fichiers conformément à des attributs des données,
une unité de mémoire (365) mémorisant des informations de temps d'enregistrement et des données de répertoire d'un fichier reçu en provenance du disque,
une unité d'interface (370) transmettant et recevant les données depuis le dispositif de terminal utilisateur (200), et
une unité de sortie audio (375) délivrant en sortie les données audio reproduites par le disque, et délivrant en sortie des messages générés par l'unité de traitement de signal numérique (355).

33. Système selon la revendication 32, dans lequel l'hôte (350) comporte en outre
une unité de détection (390) détectant une charge restante d'une batterie principale et envoyant un résultat à l'unité de traitement de signal numérique (355).
